# EUROPEAN PATENT SPECIFICATION

(11) **EP 1 310 430 B1**
(45) Date of publication and mention of the grant of the patent: **29.12.2004**
(21) Application number: 02425648.9
(22) Date of filing: 25.10.2002
(51) Int. Cl.: B65B 35/08, B65G 47/14

(54) **A method and a device for feeding confectionery products to a wrapping machine**
Verfahren und Vorrichtung zum Zuführen von Süsswaren an eine Einwickelmaschine
Méthode et dispositif pour alimenter des produits de confiserie dans une machine d'enveloppement

(30) Priority: 05.11.2001 IT BO20010668
(43) Date of publication of application: 14.05.2003
(73) Proprietor: AZIONARIA COSTRUZIONI MACCHINE AUTOMATICHE-A.C.M.A.-S.p.A., I-40131 Bologna (IT)
(72) Inventor: Salicini, Sandro, 40050 Monterenzio (Bologna) (IT)
(74) Representative: Lanzoni, Luciano

(56) References cited:
- EP-A- 0 036 282
- EP-A- 1 283 183
- US-A- 3 352 455
- US-A- 4 205 743

## Description

The present invention relates to a device for feeding confectionery products to a wrapping machine.

More particularly, the confectionery products referred to in the disclosure are "lollipops", a lollipop being a confectionery product composed typically of an edible part or sweet presenting a substantially rounded appearance, and a stick inserted partly into the sweet.

It is the conventional practice to package such products employing machines equipped with a feed system that comprises an indexable turntable having peripheral pockets. The products are supplied en masse to the turntable and transferred singly, for example through the agency of means consisting in a push rod and a corresponding reaction element such as will grip the single product during each pause of the turntable and remove it from the respective pocket in a direction substantially parallel to the axis of rotation of the turntable.

Each of the single products is fed thereafter toward a wrapping station where the sweet will be enveloped in a leaf of wrapping material through the agency of gripper means, forming a so called "bunch" type of wrap that leaves the stick exposed, **as it is disclosed in document EP 0036282.**

These intermittently operating machines tend to be somewhat slow and, moreover, the feed system described is not suitable for supplying the types of products in question to the continuous wrapping lines currently in use, typically as in flow-pack machines which are designed to turn out sealed bags containing the entire product, that is to say both the sweet and the stick, in response to the demands of hygiene now imposed by the market.

The object of the present invention is to provide a method and device for feeding lollipops to a wrapping machine, such as will be unaffected by the above drawbacks.

The stated object is suitably realized according to the present invention in a method of feeding confectionery products to a wrapping machine, wherein the products are lollipops consisting each in a sweet and a stick inserted partly into the sweet, comprising the steps of feeding the products to a turntable furnished with peripheral pockets each accommodating a respective product, orienting the products occupying the respective pockets, during the rotation of the turntable, in such a way as to align the relative sticks along a predetermined direction, characterised in that the products are fed en masse to the turntable and in that the method further comprises the step of transferring the oriented products continuously during the rotation of the turntable to a feed conveyor serving the wrapping machine, and the step whereby surplus products not inserted into the pockets are directed towards the middle of the turntable.

The present invention relates also to a device for feeding confectionery products to a wrapping machine.

In accordance with the present invention, the stated object is realized in a device for feeding confectionery products to a wrapping machine, wherein the products are lollipops consisting each in a sweet and a stick inserted partly into the sweet, comprising a dispenser device from which the products are distributed onto a turntable positioned under the dispenser and furnished with a plurality of peripheral pockets each accommodating a respective product, orienting means by which the products occupying the pockets are intercepted during the rotation of the turntable and in such a way as to align the relative sticks along a predetermined direction; characterised in that the products are fed en masse onto the turntable and in that the device further comprises transfer means by which the products are removed continuously from the single pockets during the rotation of the turntable, and a feed conveyor by which the products are taken up and directed toward the wrapping machine and rotary diverter means by which surplus products not inserted into the pockets are directed toward the middle of the turntable.

The invention will now be described in detail, by way of example, with the aid of the accompanying drawings, in which:
- figure 1 illustrates a preferred embodiment of the device according to the present invention, viewed schematically and in perspective and with certain parts omitted;
- figures 2 and 3 show the device of figure 1 in plan views from above, illustrating two different operating conditions;

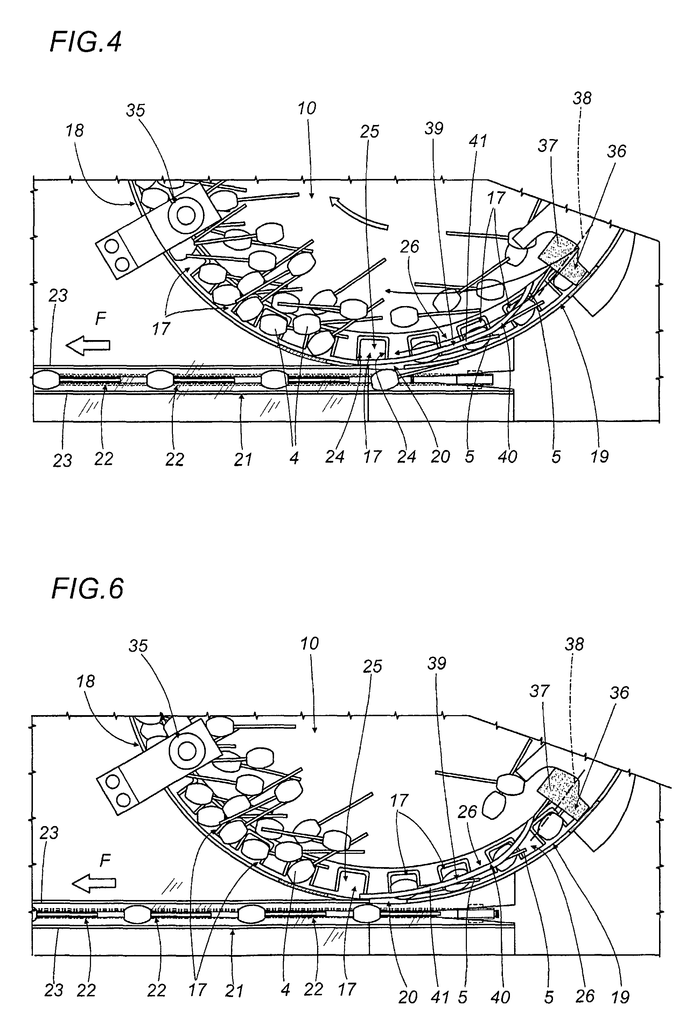

- figures 4, 5 and 6 show a detail of figure 1 in plan views and in an enlarged perspective view, illustrating three different operating steps.

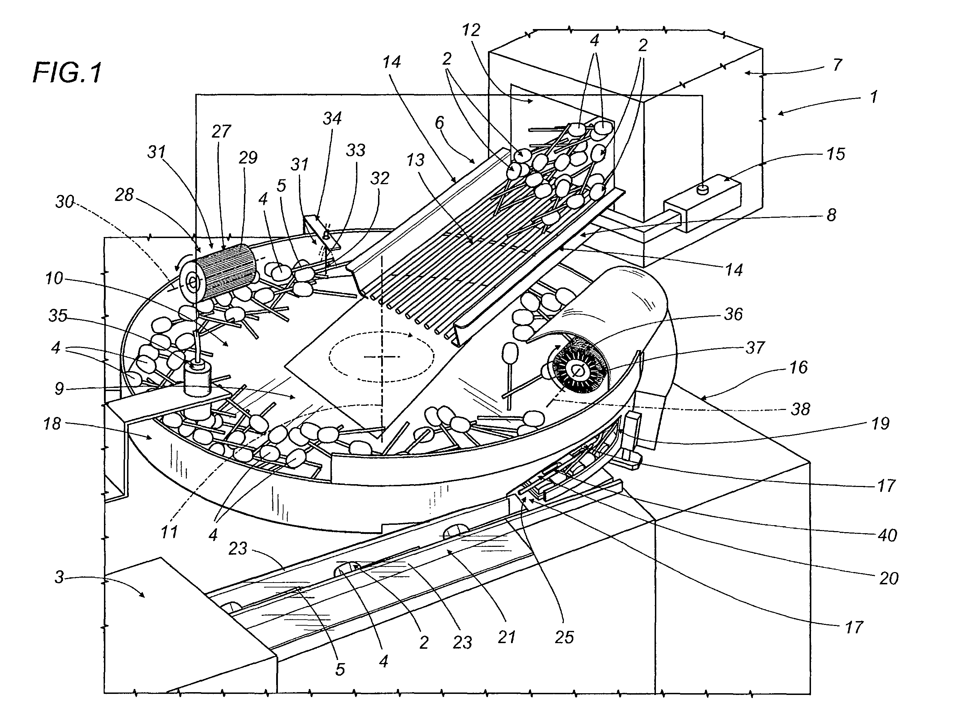

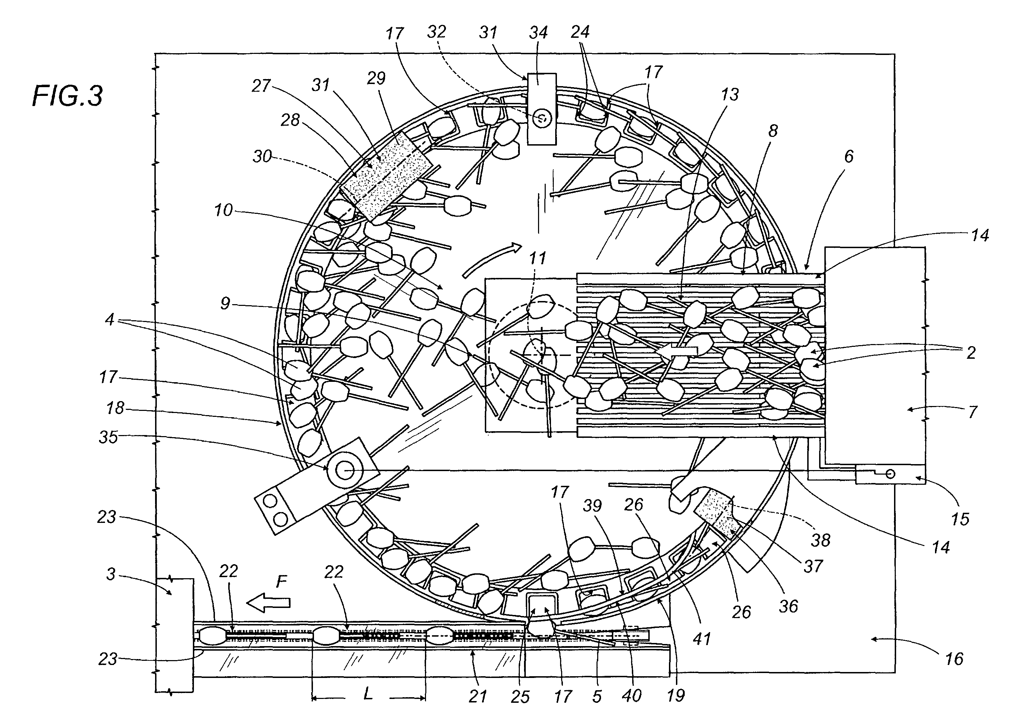

With reference to figures 1, 2 and 3 of the accompanying drawings, 1 denotes a device, in its entirety, by means of which to feed a single file of uniformly oriented products 2 to a wrapping machine of conventional type depicted simply by a block denoted 3. The products 2 in question are items of confectionery, in particular lollipops, typified by a sweet 4 of substantially rounded appearance and a stick 5 inserted partly into the sweet 4.

The device includes a dispenser 6 comprising a container 7, in which the products 2 are held, and a chute 8 down which the selfsame products 2 are directed en masse to a discharge area denoted 9. Here the products pass onto a turntable 10 located beneath the dispenser 6 and driven continuously in rotation about a vertical axis 11, moving clockwise as viewed in the drawings.

The chute 8, in particular, positioned to connect an outlet 12 of the container 7 with the discharge area 9 of the turntable 10, presents a bottom 13 in the form of a grille extending between two lateral restraints 14 and is associated with a vibrator device 15 of which the function will be described in due course.

The turntable 10, which is carried by a power driven shaft (not indicated) set in rotation about the vertical axis 11 and supported on a frame 16, appears substantially frustoconical in shape and is furnished around the periphery with a plurality of angularly equispaced pockets 17 destined to receive the single products 2. The frame 16 also supports a substantially cylindrical restraint 18 encircling and delimiting the turntable 10. The restraint 18 affords a lateral opening 19 designed to establish an outfeed portion 20 of the turntable 10 through which the advancing products 2 are directed onto a conveyor 21 placed tangentially to the turntable 10 at the outfeed portion 20 and serving the wrapping machine 3.

The conveyor 21 extends through a substantially horizontal trajectory and presents a plurality of pockets 22 accommodating the single products 2. More exactly, the conveyor 21 is delimited by two side walls 23 and the pockets 22 present a longitudinal dimension L equal to or greater than the length of the individual product 2, so that both the sweet 4 and the stick 5 can be accommodated with the stick horizontal and parallel to the feed direction F of the conveyor 21.

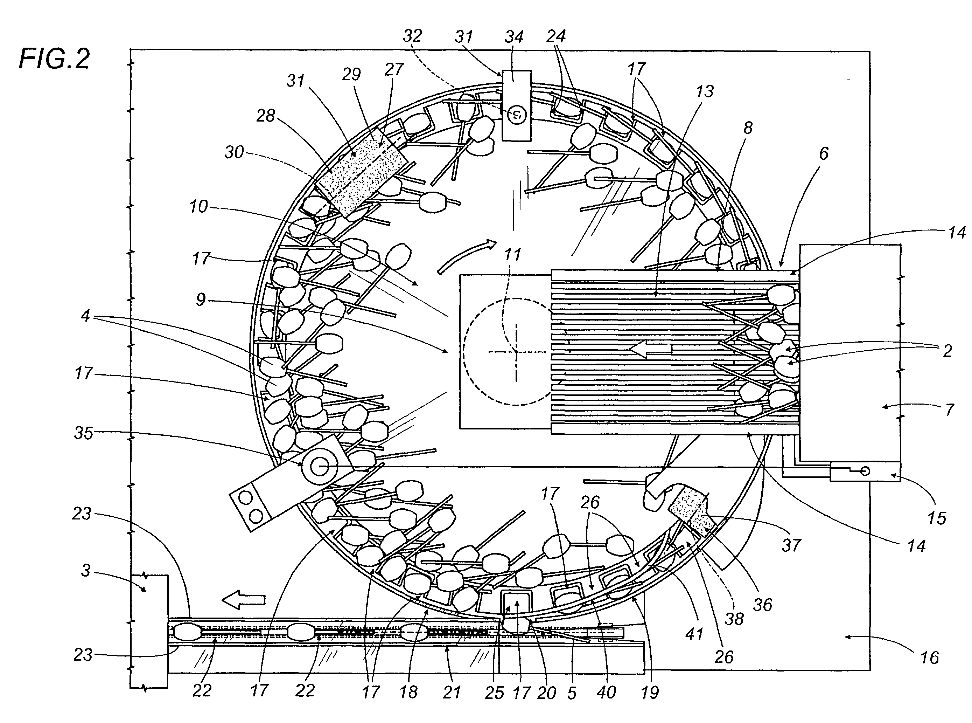

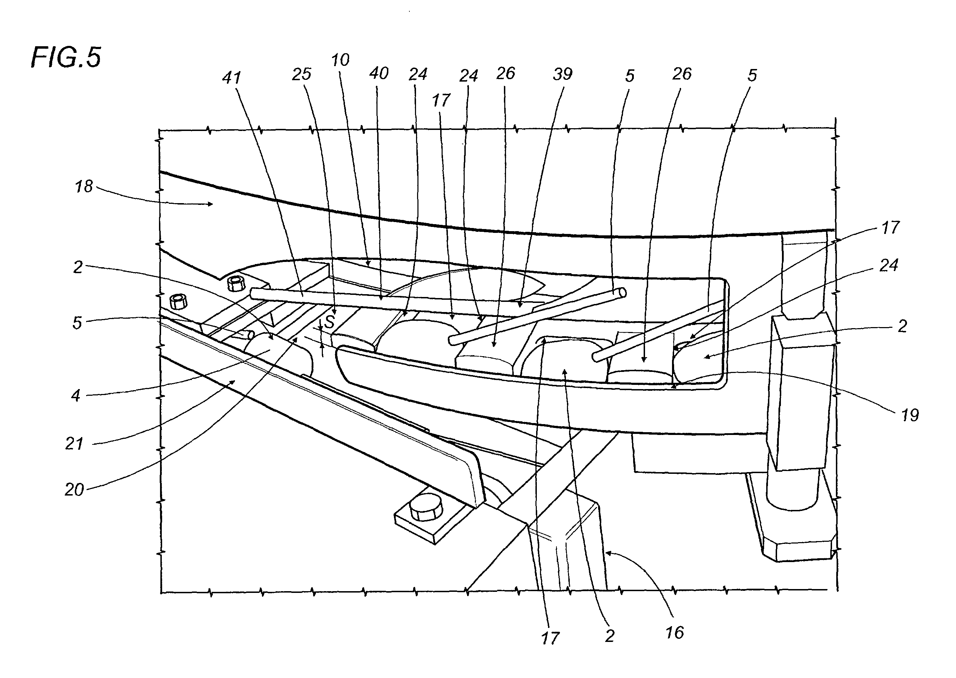

Referring to figures 2, 3 and 5, it will be seen that the peripheral pockets 17 of the turntable 10 present an essentially U-shaped outline in plan, disposed with the open side directed radially away from the turntable 10, and a predetermined axial depth determined by the thickness S of the relative side wall 24. More exactly, and as illustrated to advantage in figure 5, the pockets 17 ride over a fixed table 25 integral with the frame 16, located beneath the turntable 10 and establishing a common bottom surface for the several pockets 17, whilst the top edge 26 of the side wall 24 presented by each pocket 17 affords a surface on which to rest the stick 5 of the product 2 once the sweet 4 has settled in the pocket 17.

To ensure that each sweet 4 of a single product 2 locates in a corresponding pocket 17, the device 1 comprises agitator means 27, positioned downstream of the discharge area 9 considered in relation to the direction of rotation of the turntable 10 about the vertical axis 11, in such a way as to intercept the products 2 are. Such agitator means comprise means 28 embodied as a roller brush 29 rotatable about a horizontal axis 30 in an anticlockwise direction as seen in figure 1, and positioned over a stretch of the path followed by the pockets 17.

Importantly, the products 2 must be directed onto the feed conveyor 21 serving the wrapping machine 3 oriented in a precise manner, or rather, with the sweet 4 forwardmost along the direction followed by the products 2 and the stick 5 parallel to the direction of movement. To ensure that the products are disposed in the manner described, the device 1 is equipped with orienting means 31, of which the aforementioned agitator means 27 form a part, given that besides assisting the entry of the sweets 4 into the pockets 1, these same means serve also to assist the correct orientation of the products 2. Also forming part of the orienting means 31 is a rigid element 32 located downstream of the agitator means 27, of which the function is to intercept the sticks 5. The rigid element 32 comprises a rod 33 carried by a bracket 34 rigidly associated with the frame 16. The rod 33 is vertically disposed and pivotable flexibly in relation to the bracket 34 about a horizontal axis.

The device 1 further comprises sensor means 35 located at a given point upstream of the agitator means 27 relative to the direction of rotation of the turntable 10 and near to the discharge area 9 of the dispenser 6, serving to monitor the level of the mass of products 2 carried in rotation by the turntable 10. The vibrator device 15 is interlocked to the sensor means 35, so that when the level of the mass of products 2 falls below a predetermined value, the sensor means will relay a signal to the vibrator device 15, which responds by vibrating the chute 8 for a given period of time and thus causing a mass of products 2 to flow from the outlet 12 of the container toward the discharge area 9.

The device 1 also incorporates rotating diverter means 36 located near the outfeed portion 20 and comprising a roller brush 37, rotatable clockwise as viewed in figure 1 about a horizontal axis 38, by which products 2 not occupying the pockets 17, and therefore surplus to the flow transferable at any one time, are directed back toward the middle of the turntable 10 and distanced from the lateral opening 19.

Also stationed near the lateral opening 19 are transfer means 39 by which the products 2 can be engaged singly and in succession and with no break in continuity and directed from the pockets 17 of the turntable 10 to the pockets 22 of the conveyor 21.

In particular, the transfer means 39 comprise intercepting means 40 extending along the outfeed portion 20 of the turntable 10 and consisting in a fixed helical rail 41 positioned in such a way as to engage the sticks 5 of the products 2 occupying the respective pockets 17, which will be resting directly on the top edge 26 of the pocket 17 and thus angled in relation to the fixed table 25.

The effect of the interception step is to direct the sticks 5 away from the turntable 10, in such a way that the sweets 4 are distanced gradually from the respective pockets 17 in a radial direction and transferred ultimately to the pockets 22 of the conveyor 21.

In operation, as discernible readily from the description of the device 1 thus far, products 2 released by the dispenser 6 onto the turntable 10 are carried in rotation about the vertical axis 11 and engaged initially by the first roller brush 29 which, rotating about its own axis 30, assists the insertion of the sweets 4 into the pockets 17 and in the process performs a first orienting action on the sticks 5. Thereafter, the sticks 2 are engaged by the rod 33, and the orienting step is completed.

The sticks 5 of the products 2 inserted in the pockets 17 and angled in relation to the table 25 are then intercepted by the helical rail 41, with the result that the products 2 will be transferred from the turntable 10 to the conveyor 21.

## Claims

1. A method of feeding confectionery products to a wrapping machine, wherein the products (2) are lollipops consisting each in a sweet (4) and a stick (5) inserted partly into the sweet (4), comprising the steps of feeding the products (2) to a turntable (10) furnished with peripheral pockets (17) each accommodating a respective product (2), orienting the products (2) occupying the respective pockets (17), during the rotation of the turntable (10), in such a way as to align the relative sticks (5) along a predetermined direction, **characterised in that** the products (2) are fed en masse to the turntable (10) and **in that** the method further comprises the step of transferring the oriented products (2) continuously during the rotation of the turntable (10) to a feed conveyor (21) serving the wrapping machine (3), and the step whereby surplus products (2) not inserted into the pockets (17) are directed towards the middle of the turntable.

2. A method as in claim 1, further comprising a step of intercepting and agitating the products (2) in such a way as to assist the insertion of each one into a relative pocket (17).

3. A method as in preceding claims, wherein the transfer step includes a step of removing the products (2) radially from the corresponding pockets (17).

4. A method as in claim 3, wherein the removal step includes a step of intercepting the sticks (5) in such a way that they are caused to veer outward from the turntable (10).

5. A method as in preceding claims, comprising a step of monitoring the level of the mass of products (2) on the turntable (10).

6. A device for feeding confectionery products to a wrapping machine, wherein the products (2) are lollipops consisting each in a sweet (4) and a stick (5) inserted partly into the sweet (4), comprising a dispenser device (6) from which the products (2) are distributed onto a turntable (10) positioned under the dispenser (6) and furnished with a plurality of peripheral pockets (17) each accommodating a respective product (2); orienting means (31) by which products (2) occupying the pockets (17) are intercepted during the rotation of the turntable (10) and in such a way as to align the relative sticks (5) along a predetermined direction; **characterised in that** the products (2) are fed en masse onto the turntable and **in that** the device further comprises transfer means (39) by which the products (2) are removed continuously from the single pockets (17) during the rotation of the turntable, and a feed conveyor (21) by which the products (2) are taken up and directed toward the wrapping machine (3) and rotary diverter means (36) by which surplus products (2) not inserted into the pockets (17) are directed toward the middle of the turntable (10).

7. A device as in claim 6, further comprising agitator means (27) that serve to intercept the products (2) and assist their insertion into the respective pockets (17).

8. A device as in claim 6, wherein the peripheral pockets (17) each present an essentially U-shaped outline in plan, disposed with the open side directed radially away from the turntable (10), and a predetermined axial depth determined by the thickness (S) of the relative side wall (24), the top edge (26) of the side walls (24) presented by each pocket (17) affording a surface on which to rest the stick (5) of the product(2) in such a manner that the selfsame stick (5) assumes an angled position relative to a horizontal plane.

9. A device as in claim 8, wherein the transfer means (39) incorporate intercepting means (40) extending a given distance along an outfeed portion (20) of the turntable (10), by which the products (2) are displaced radially from the inside of the respective pockets (17) toward the feed conveyor (21).

10. A device as in claim 9, wherein the intercepting means (40) comprise a fixed rail (41) of helical geometry positioned over the outfeed portion of the turntable (10) in such a way as to intercept the sticks (5), causing the selfsame sticks (5) to veer outwards and the respective sweets (4) thereupon to be removed from the corresponding pockets (17).

11. A device as in claim 10, wherein the feed conveyor (21) serving the wrapping machine (3) lies tangential to the turntable (10) in the vicinity of the outfeed portion (20) and presents a plurality of pockets (22), positioned to take up the products (2), of which the longitudinal dimension (L) is proportioned so that both the sweet (4) and the stick (5) can be accommodated by the single pocket (22) with the stick lying horizontal and parallel to the feed direction of the conveyor (21).

12. A device as in claim 6, wherein the orienting means (31) comprise rotating means (28) located, relative to the direction of rotation of the turntable (10), downstream of a discharge area (9) at which the products (2) are directed onto the turntable (10) by the dispenser device (6).

13. A device as in claim 12, wherein the rotating means (28) incorporate a roller brush (29) positioned over a stretch of a path followed by the pockets (17).

14. A device as in claim 6, wherein the orienting means (31) comprise at least one rigid element (32) positioned to intercept and interact with the sticks (5).

15. A device as in claim 14, wherein the rigid element (32) comprises a vertical rod (33) pivotable flexibly about a horizontal axis.

16. A device as in claims 6 to 15, comprising sensor means (35) located in the neighbourhood of the discharge area (9) onto which the products (2) are distributed en masse, and serving to monitor the mass of products, wherein the dispenser device (6) is interlocked to the sensor means (35).

17. A device as in claims 6 to 16, wherein the rotary diverter means (36) are positioned upstream of the discharge area (9), relative to the direction of rotation of the turntable (10).

18. A device as in claim 17, wherein the rotary diverter means (36) comprise a brush (37).

## Patentansprüche

1. Verfahren zum Zuführen von Süsswarenprodukten an eine Einwickelmaschine, bei welchem die Produkte (2) Lutscher sind, bestehend jeder aus einer Süssigkeit (4) und einem Stiel (5), der zum Teil in die Süssigkeit (4) eingesetzt ist, enthaltend die Phasen des Zuführens der Produkte (2) an einen Drehtisch (10), der mit umlaufenden Taschen (17) versehen ist, jede ein jeweiliges Produkt (2) aufnehmend, und des Ausrichtens der die jeweiligen Taschen (17) belegenden Produkte (2) während der Umdrehung des Drehtisches (10) auf solche Weise, dass die entsprechenden Stiele (5) entlang einer vorgegebenen Richtung angeordnet werden, **dadurch gekennzeichnet, dass** die Produkte (2) dem Drehtisch (10) in Massen zugeführt werden, und dadurch, dass das Verfahren ausserdem die Phase des kontinuierlichen Übertragens der ausgerichteten Produkte (2) an einen Zuführförderer (21) enthält, welcher die Einwickelmaschine (3) beschickt, sowie die Phase, in welcher der Überschuss von nicht in die Taschen (17) eingegebenen Produkten (2) zur Mitte des Drehtisches hin geleitet wird.

2. Verfahren nach Patentanspruch 1, weiter enthaltend eine Phase des Abfangens und Schüttelns der Produkte (2) auf solche Weise, dass das Einsetzen eines jeden in eine entsprechende Tasche (17) unterstützt wird.

3. Verfahren nach den vorstehenden Patentansprüchen, bei welchem die Transferphase eine Phase des Entfernens der Produkte (2) radial aus den entsprechenden Taschen (17) enthält.

4. Verfahren nach Patentanspruch 3, bei welchem die Phase des Entfernens eine Phase des Abfangens der Stiele (5) auf solche Weise enthält, dass diese dazu gebracht werden, sich von dem Drehtisch (10) nach aussen zu drehen.

5. Verfahren nach den vorstehenden Patentansprüchen, enthaltend eine Phase der Überwachung der Masse von Produkten (2) auf dem Drehtisch (10).

6. Vorrichtung zum Zuführen von Süsswarenprodukten an eine Einwickelmaschine, bei welchem die Produkte (2) Lutscher sind, bestehend jeder aus einer Süssigkeit (4) und einem Stiel (5), der zum Teil in die Süssigkeit (4) eingesetzt ist, enthaltend eine Abgabevorrichtung (6), aus welcher die Produkte (2) auf dem Drehtisch (10) verteilt werden, der unter der Abgabevorrichtung (6) angeordnet und mit einer Anzahl von umlaufenden Taschen (17) versehen ist, jede ein jeweiliges Produkt (2) aufnehmend; Ausrichtmittel (31), durch welche die die Taschen (17) belegenden Produkte (2) während der Umdrehung des Drehtisches (10) auf solche Weise abgefangen werden, dass die entsprechenden Stiele (5) entlang einer vorgegebenen Richtung ausgerichtet werden; **dadurch gekennzeichnet, dass** die Produkte (2) in Massen auf den Drehtisch (10) gegeben werden, und dadurch, dass die Vorrichtung ausserdem Transfermittel (39) enthält, durch welche die Produkte (2) kontinuierlich während der Umdrehung des Drehtisches aus den einzelnen Taschen (17) entfernt werden, einen Zuführförderer (21), durch welchen die Produkte (2) aufgenommen und an die Einwickelmaschine (3) geleitet werden, sowie sich drehende Ableitmittel (36), durch welche der Überschuss an nicht in die Taschen (17) eingegebenen Produkten (2) zur Mitte des Drehtisches (10) hin geleitet wird.

7. Vorrichtung nach Patentanspruch 6, ausserdem enthaltend Schüttelmittel (27), die dazu dienen, die Produkte (2) abzufangen und deren Einsetzen in die jeweiligen Taschen ( 17) zu unterstützen.

8. Vorrichtung nach Patentanspruch 6, bei welcher die umlaufenden Taschen (17) in Planansicht jede eine im wesentlichen U-förmige Ausbildung aufweisen, angeordnet mit der offenen Seite radial von dem Drehtisch (10) fort gerichtet, und eine bestimmte axiale Tiefe, die durch die Stärke (S) der entsprechenden Seitenwand (24) bestimmt wird, wobei die obere Kante (26) der Seitenwände (24), die von einer jeden Tasche (17) aufgewiesen werden, eine Fläche bildet, an welcher der Stiel (5) des Produktes (2) auf solche Weise anliegt, dass der Stiel (5) im Verhältnis zu einer horizontalen Ebene eine angewinkelte Position einnimmt.

9. Vorrichtung nach Patentanspruch 8, bei welcher die Transfermittel (39) Abfangmittel (40) enthalten, die sich über einen bestimmten Abstand entlang einem Austrittsabschnitt (20) des Drehtisches (10) erstrecken, und durch welche die Produkte (2) radial vom Inneren der jeweiligen Taschen (17) her in Richtung des Zuführförderers (21) verschoben werden.

10. Vorrichtung nach Patentanspruch 9, bei welcher die Abfangmittel (40) eine feststehende Schiene (41) von schneckenförmiger Geometrie enthalten, angeordnet über dem Austrittsabschnitt des Drehtisches (10) auf solche Weise, dass die Stiele (5) abgefangen werden, was das Schwingen nach aussen der Stiele (5) selbst bewirkt und daraufhin das Entfemen der jeweiligen Süssigkeiten (4) aus den entsprechenden Taschen (17).

11. Vorrichtung nach Patentanspruch 10, bei welcher der die Einwickelmaschine (3) beschickende Zuführförderer (21) tangential zu dem Drehtisch (10) in der Nähe des Austrittsabschnittes (20) liegt und eine Anzahl von Taschen (22) aufweist, angeordnet zur Aufnahme der Produkte (2), von welchen die Längenabmessung (L) so proportioniert ist, dass die Süssigkeit (4) und der Stiel (5) von einer einzelnen Tasche (22) aufgenommen werden kann, wobei der Stiel horizontal und parallel zu der Zuführrichtung des Förderers (21) angeordnet ist.

12. Vorrichtung nach Patentanspruch 6, bei welcher die Ausrichtmittel (31) Drehmittel (28) enthalten, die im Verhältnis zu der Drehrichtung des Drehtisches (10) stromabwärts eines Entladebereiches (9) angeordnet sind, in welchem die Produkte (2) durch die Abgabevorrichtung (6) auf den Drehtisch (10) gegeben werden.

13. Vorrichtung nach Patentanspruch 12, bei welcher die Drehmittel (28) eine Rolienbürste (29) enthalten, positioniert über einer Strecke einer Bahn, welcher die Taschen (17) folgen.

14. Vorrichtung nach Patentanspruch 6, bei welcher die Ausrichtmittel (31) wenigstens ein starres Element (32) enthalten, positioniert zum Abfangen und Zusammenwirken mit den Stielen (5).

15. Vorrichtung nach Patentanspruch 14, bei welcher das starre Element (32) eine vertikale Stange (33) enthält, die elastisch um eine horizontale Achse schwingt.

16. Vorrichtung nach den Patentansprüchen von 6 bis 15, enthaltend Fühlermittel (35), die in der Nähe des Entladebereiches (9) angeordnet sind, auf welchen die Produkte (2) abgegeben werden, und die dazu dienen, die Masse von Produkten zu überwachen, wobei die Abgabevorrichtung (6) mit den Fühlermitteln (35) verriegelt ist.

17. Vorrichtung nach den Patentansprüchen von 6 bis 16, bei welcher die sich drehenden Ableitmittel (36) im Verhältnis zu der Drehrichtung des Drehtisches (10) stromaufwärts des Entladebereiches (9) positioniert sind.

18. Vorrichtung nach Patentanspruch 17, bei welcher die sich drehenden Ableitmittel (36) eine Bürste (37) enthalten.

## Revendications

1. Une méthode pour alimenter des produits de confiserie dans une machine d'enveloppement, où les produits (2) en question sont des sucettes consistant chacune en un bonbon (4) et un bâton (5) inséré partiellement dans ce même bonbon (4), comprenant les phases consistant à alimenter les produits (2) à un plateau tournant (10) équipé de poches périphériques (17) logeant chacune un produit (2) respectif, à orienter les produits (2) occupant les poches (17) respectives, durant la rotation du plateau tournant (10), de manière à aligner les bâtons (5) correspondants selon une direction prédéterminée, ladite méthode étant **caractérisée en ce que** les produits (2) sont alimentés en masse au plateau tournant (10) et **en ce qu'**elle comprend également la phase consistant à transférer, de façon continue et durant la rotation du plateau tournant (10), les produits orientés (2) à un convoyeur d'alimentation (21) desservant la machine d'enveloppement (3), ainsi que la phase consistant à dévier vers le milieu du plateau tournant les produits (2) en excès non introduits dans les poches (17).

2. La méthode selon la revendication 1, **caractérisée en ce qu'**elle comprend également une phase consistant à intercepter et à agiter les produits (2) de manière à favoriser l'introduction de chacun d'eux dans une poche (17) respective.

3. La méthode selon les revendications précédentes, **caractérisée en ce que** la phase de transfert comprend une phase consistant à extraire radialement les produits (2) des poches (17) correspondantes.

4. La méthode selon la revendication 3, **caractérisée en ce que** la phase d'extraction comprend une phase consistant à intercepter les bâtons (5) de manière à les faire virer vers l'extérieur du plateau tournant (10).

5. La méthode selon les revendications précédentes, **caractérisée en ce qu'**elle comprend une phase de contrôle de la masse de produits (2) sur le plateau tournant (10).

6. Un dispositif pour alimenter des produits de confiserie dans une machine d'enveloppement, où les produits (2) en question sont des sucettes consistant chacune en un bonbon (4) et un bâton (5) inséré partiellement dans ce même bonbon (4), comprenant un dispositif distributeur (6) destiné à distribuer les produits (2) sur un plateau tournant (10) situé sous le dispositif distributeur (6) lui-même et équipé d'une pluralité de poches périphériques (17) logeant chacune un produit (2) respectif ; des moyens d'orientation (31) destinés à intercepter, durant la rotation du plateau tournant (10), les produits (2) occupant les poches (17) de manière à aligner les bâtons (5) correspondants selon une direction prédéterminée ; ledit dispositif étant **caractérisé en ce que** les produits (2) sont alimentés en masse sur le plateau tournant et **en ce qu'**il comprend également des moyens de transfert (39) destinés à extraire, de façon continue et durant la rotation du plateau tournant, les produits (2) des poches (17) correspondantes, et un convoyeur d'alimentation (21) destiné à recevoir les produits (2) et à les acheminer vers la machine d'enveloppement (3) ainsi que des moyens de déviation tournants (36) destinés à dévier vers le milieu du plateau tournant (10) les produits (2) en excès non introduits dans les poches (17).

7. Le dispositif selon la revendication 6, **caractérisé en ce qu'**il comprend également des moyens agitateurs (27) destinés à intercepter les produits (2) et à favoriser leur introduction dans les poches (17) respectives.

8. Le dispositif selon la revendication 6, **caractérisé en ce que** les poches périphériques (17) présentent chacune un contour en plan essentiellement en « U », sont disposées avec le côté ouvert orienté en sens radial vers l'extérieur du plateau tournant (10) et ont une profondeur axiale prédéterminée définie par l'épaisseur (S) de la paroi latérale (24) correspondante, le bord supérieur (26) des parois latérales (24) de chaque poche (17) fournissant une surface d'appui au bâton (5) du produit (2) de manière à ce que le bâton (5) lui-même prenne une position inclinée par rapport à un plan horizontal.

9. Le dispositif selon la revendication 8, **caractérisé en ce que** les moyens de transfert (39) comprennent des moyens d'interception (40) qui se développent sur une distance donnée le long d'une portion (20) de sortie du plateau tournant (10) et destinés à déplacer radialement les produits (2) de l'intérieur des poches (17) respectives vers le convoyeur d'alimentation (21).

10. Le dispositif selon la revendication 9, **caractérisé en ce que** les moyens d'interception (40) comprennent un rail fixe (41), à développement hélicoïdal, positionné au-dessus de la portion de sortie du plateau tournant (10) de manière à intercepter les bâtons (5) afin que les bâtons (5) eux-mêmes virent vers l'extérieur et que les bonbons (4) respectifs soient extraits des poches (17) correspondantes.

11. Le dispositif selon la revendication 10, **caractérisé en ce que** le convoyeur d'alimentation (21) desservant la machine d'enveloppement (3) est disposé tangentiellement au plateau tournant (10) à proximité de la portion de sortie (20) et présente une pluralité de poches (22), disposées pour recevoir les produits (2) et dont la dimension-longitudinale (L) est proportionnée pour que le bonbon (4) et le bâton (5) puissent tous deux être logés par chaque poche (22) avec le bâton orienté horizontalement et parallèlement à la direction d'avancement du convoyeur (21).

12. Le dispositif selon la revendication 6, **caractérisé en ce que** les moyens d'orientation (31) comprennent des moyens rotatifs (28) situés, par rapport au sens de rotation du plateau tournant (10), en aval d'une zone de déchargement (9) au niveau de laquelle les produits (2) sont placés sur le plateau tournant (10) par l'intermédiaire du dispositif distributeur (6).

13. Le dispositif selon la revendication 12, **caractérisé en ce que** les moyens rotatifs (28) comprennent une brosse rouleau (29) positionnée au-dessus d'un tronçon d'un parcours suivi par les poches (17).

14. Le dispositif selon la revendication 6, **caractérisé en ce que** les moyens d'orientation (31) comprennent au moins un élément rigide (32) positionné pour intercepter et interagir avec les bâtons (5).

15. Le dispositif selon la revendication 14, **caractérisé en ce que** l'élément rigide (32) comprend une tige verticale (33) pouvant pivoter élastiquement autour d'un axe horizontal.

16. Le dispositif selon les revendications de 6 à 15, **caractérisé en ce qu'**il comprend des moyens capteurs (35) situés à proximité de la zone de déchargement (9) sur laquelle les produits (2) sont distribués en masse et destinés à contrôler la masse de produits, où le dispositif distributeur (6) est asservi aux moyens capteurs (35).

17. Le dispositif selon les revendications de 6 à 16, **caractérisé en ce que** les moyens de déviation tournants (36) sont situés en amont de la zone de déchargement (9), par rapport au sens de rotation du plateau tournant (10).

18. Le dispositif selon la revendication 17, **caractérisé en ce que** les moyens de déviation tournants (36) comprennent une brosse (37).
